(19)

Europäisches
Patentamt
European
Patent Office
Office européen
des brevets

(11) **EP 3 789 904 A1**

(12) # EUROPEAN PATENT APPLICATION

(43) Date of publication:
**10.03.2021 Bulletin 2021/10**

(21) Application number: **19196083.0**

(22) Date of filing: **09.09.2019**

(51) Int Cl.:
**G06F 30/23** *(2020.01)*     **G06F 30/27** *(2020.01)*
**G06F 111/10** *(2020.01)*     **G06F 111/08** *(2020.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventors:
• **Wagner, Joerg**
  **71272 Renningen (DE)**
• **Schaefer, Benjamin Josef**
  **73119 Zell Unter Aichelberg (DE)**
• **Kuhn, Jannick**
  **76137 Karlsruhe (DE)**
• **Finnie, Nicole Ying**
  **71034 Boeblingen (DE)**
• **Spitz, Jonathan**
  **71229 Leonberg (DE)**

(54) **METHOD AND SYSTEM FOR CALIBRATING A SIMULATION SYSTEM FOR SIMULATING MICROMECHANICAL RESPONSE CHARACTERISTICS OF MICROSTRUCTURES UNDER INVESTIGATION**

(57)     The present invention relates to a computer-implemented method for calibrating a micromechanical simulation process used for simulating the micromechanical behavior of a material of a workpiece by determining simulation model parameters, comprising the steps of:
- Providing microstructure data of a given workpiece;
- Physically or experimentally evaluating a mechanical behaviour of the given workpiece;
- Performing a Bayesian optimization process on the basis of a trainable quality function to optimize the simulation model parameter for the given workpiece.

EP 3 789 904 A1

**Description**

Technical field

The present invention relates to micromechanical simulations of mechanical properties of a workpiece having a particular microstructure based on microstructure images of the material. Furthermore, the present invention relates to methods for calibration of such a simulation process.

Technical background

Micromechanical simulations are made to evaluate the mechanical behavior of a material from microstructural data. Conventionally, these simulations can be based on either experimentally obtained grain data, e.g. an EBSD (Electron Backscatter Diffraction) image, or on synthetically generated morphologies. Generally, it is a goal to simulate the microstructure-dependent mechanical behavior of a workpiece, e.g. by methods, such as the Crystal Plasticity Finite Element Method (CPFEM).

The simulation of a microstructure to evaluate the lifetime of a workpiece with the underlying microstructure is based on fatigue indicator parameters which correspond to a material meta-response. Such a micromechanical simulation using an FEM-method is usually very complex and time-consuming.

Furthermore, the model for simulation of the micromechanical characteristics of a material based on an EBSD image needs to be calibrated which is conventionally performed by means of manually comparing simulation results against experimental data.

Summary of the invention

According to the present invention, a method for calibrating a micromechanical simulation process used for simulating the micromechanical behavior of a material of a workpiece according to claim 1 and a system according to the further independent claim are provided.

Further embodiments are indicated in the depending subclaims.

According to a first aspect, a computer-implemented method for calibrating a micromechanical simulation process used for simulating the micromechanical behavior of a material of a workpiece by determining simulation model parameters is provided, comprising the steps of:

- Providing microstructure data of a given workpiece;
- Physically or experimentally evaluating the mechanical response of the microstructure representative of the given workpiece;
- Performing a Bayesian optimization process on the basis of a trainable quality function to optimize the simulation model parameters for the given workpiece.

Conventionally, the mechanical properties or the mechanical response of a material are simulated by means of a simulation system using a simulation model. The simulation model can be a Crystal Plasticity Finite Element Method based on microstructure data such as an EBSD image and a given load condition. The microstructure EBSD image may be taken from a cutting surface probe of the material of a workpiece or can be computer-generated. The EBSD image may then be processed by means of the simulation system to analyze micromechanical responses such as stress, strain and energy fields in the microstructure of the material. Before running the simulation, the simulation model parameters of the micromechanical simulation model need to be calibrated by adjusting a number of simulation model parameters, such as critical resolved shear stress, hardening parameters and size parameters.

It is an idea of the above calibration method to calibrate the simulation model parameters of a micromechanical simulation model using a machine learning model. This allows to reduce the time required for the calibration of the simulation model which is conventionally performed using experimental data and e.g. genetic algorithms and the like.

Moreover, the calibration time may be further reduced by transferring knowledge from previously seen materials to a new material. Previously gathered data, obtained by calibrating the system for other materials, may be used to construct a joint-model which captures the performance of a given set of parameters for a given material. When calibrating the system for a new material, this joint-model may help warm-start the calibration by providing a good initial guess of the optimal parameters.

The optimization of the simulation model parameters is performed by comparing the simulation results based on a set of simulation model parameters and an experimentally measured mechanical behavior. Furthermore, a Bayesian optimization method is used which allows to reduce the number of experimental simulations, essentially so that a good approximation of the appropriate simulation model parameters with a low number of experimental simulations can be obtained.

Moreover, using the underlying model of the Bayesian optimization allows to calibrate the simulation model parameters of the micromechanical simulation model for different materials so that previously obtained simulation model parameters can be further used to estimate how the simulation model parameters change when the material to be simulated changes.

Thereby, a simulation meta-model can be trained which enables a transferability of information from previous calibration processes. Bayesian optimization processes relates on a Gaussian model which serves as a quality function indicating the quality of the simulation model parameters to be optimized. In the present application, the quality function indicates the correctness of the simulation model parameters by means of a quality measure. Particularly, the quality measure indicates how well the simulation model parameters allow to simulate the micromechanical response of a material with respect to the real mechanical response of the material. The quality measure, therefore, substantially depends on a difference of one or more mechanical responses obtained by the micromechanical simulation results (based on the actual simulation model parameters) and one or more mechanical responses experimentally measured.

In the Bayesian optimization process, the quality function is continuously improved until a given convergence criterion is satisfied. The resulting simulation model parameters can then be used to simulate the micromechanical response of a material based on an EBSD or microstructure image with a required accuracy.

Moreover, the quality function may define a quality measure depending on the simulation model parameters, wherein the quality measure is designed to evaluate a difference between the experimentally evaluated mechanical behaviour and a modelled mechanical behaviour, wherein the modelled mechanical behaviour is obtained by means of the simulation with the corresponding simulation model parameters.

Furthermore, the mechanical behaviour may include one or more mechanical properties and/or macroscopic mechanical response characteristics, wherein the modelled mechanical behaviour is obtained by performing a micromechanical simulation on the microstructure data to obtain one or more mechanical response arrays and by analysing the one or more mechanical response arrays to obtain the one or more mechanical properties and/or macroscopic mechanical response characteristics.

Particularly, the one or more micromechanical response arrays may include an array of stress values, strain values and/or energy levels.

It may be provided that the simulation model parameters further include material parameters indicating material characteristics and/or a material composition.

According to an embodiment, the Bayesian optimization process may be performed on workpieces with different materials.

The simulation model parameters may include critical resolved shear stress, hardening parameters and size parameters.

Furthermore, the mechanical behaviour may include determining mechanical properties, particularly including Young's modulus or components of the stiffness tensor, and/or macroscopic mechanical response characteristics, e.g. stress-strain hysteresis.

Brief description of the drawings

Embodiments are described in more detail in conjunction with the accompanying drawings in which:

Figure 1    shows a block diagram of a system for simulating mechanical properties of a material based on an EBSD image.

Figure 2    shows a flowchart illustrating the method for calibrating a micromechanical simulation model.

Description of embodiments

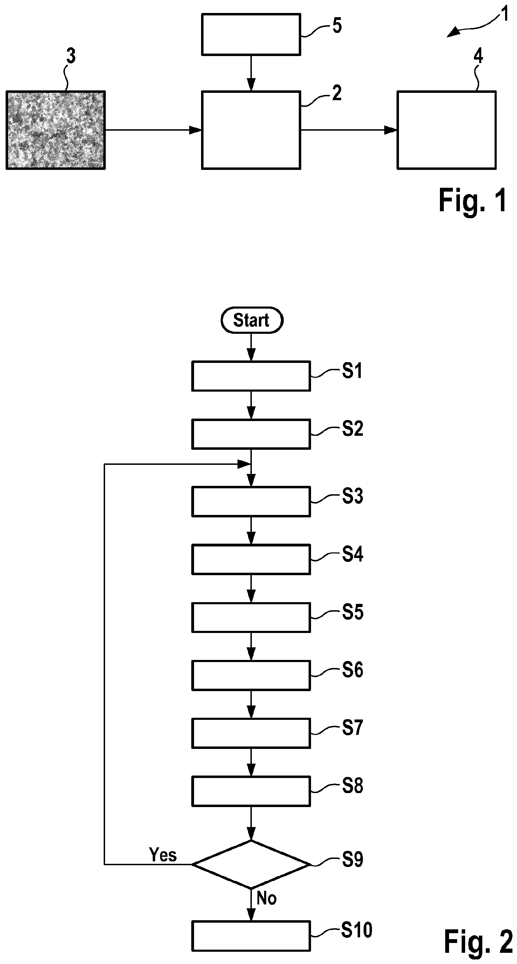

Figure 1 shows a system for simulating a mechanical response of a material or a workpiece based on microstructure data, such as an EBSD image. The simulation system 1 comprises a simulation possessing unit 2 for performing the simulation. As input for the simulation, micromechanical data for an EBSD or microstructure image is provided from a microstructure image block 3 so that an indication of the microstructure of the material or the workpiece is input into the simulation processing unit 2.

The microstructure data may be obtained from a workpiece to be analyzed. The workpiece is cut and polished/etched to obtain a cutting surface which is scanned using an electron backscatter diffraction method as well known in the art, e.g. by means of a Scanning Electron Microscope. Thereby, a so called EBSD image (Electron Backscatter Diffraction) is obtained which may form the basis for an analysis of the micromechanical properties of the probed material of the workpiece.

Furthermore, a synthetically generated microstructure image can be provided as well. Such microstructure images can be used for training, if the synthetic data of the microstructure images represent the same properties as the EBSD image as for example: Crystallographic properties, grainsize distribution, misorientation distribution. In case of equal microstructural properties of the synthetic microstructures and EBSD based microstructures, they are called statistically equivalent. Statistical equivalent synthetic microstructures show an equivalent cyclic effective material behavior as obtained from EBSD.

Conventionally, the EBSD or microstructure image is used as an input for a micromechanical simulation to obtain one or more micromechanical response arrays indicating the distribution of stress, strain and/or energy levels (fatigue level values) over the image of the probed material.

The resulting micromechanical response arrays may then be used in analyzing block 4 to calculate one or more mechanical properties and/or macroscopic mechanical responses of the workpiece made of the specifically probed material, such as the resistance of the material against fatigue, the average lifetime of the workpiece or the like. The determining of the mechanical properties of the material depending on the network output is made by combining the values of the respective mechanical response array pixel by pixel, e.g. by obtaining a minimum, a maximum, a mean of the pixel (or pixel group) values of the respective mechanical response array. For instance, the fatigue indicator parameters of the respective mechanical response array can be used to predict the crack initiation time and its position in the given microstructure.

To obtain correct simulation results, the simulation model used in the simulation processing unit 2 has to be calibrated. The calibration is made by adjusting simulation model parameters, particularly for different material components. Possible simulation model parameters may include critical resolved shear stress, hardening parameters and size parameters. Therefore, the calibration is usually performed any time a new material or a new workpiece made of a material is used. The result of the simulation is a micromechanical response array which may include arrays indicating the distribution of stress, strain and energy levels over the EBSD image.

The calibration method is performed in a calibration processing unit 5 using a Bayesian optimization process. The computer-implemented method performed in the calibration processing unit 5 may be implemented as software and/or hardware and comprises the following steps as described below in conjunction with the flowchart of Figure 2.

In Figure 2, the flowchart indicates a method for obtaining simulation model parameters in a calibration process. Basically, the goal is to find the simulation model parameters by which a simulation model can be adjusted so that for a material of a given workpiece the respective one or more mechanical properties and/or macroscopic mechanical response characteristics can be obtained just using the simulation model without the need of a physical measurement.

In step S1, a workpiece material is selected and prepared to obtain a microstructure data such as the EBSD image. The EBSD image 2 can be obtained by cutting a workpiece or material, by polishing and etching the cutting surface and by taking an electron backscatter image. An example of such an EBSD image is shown in Figure 1. The EBSD image may be made available in a standard image format so that an array of pixels, each having a different color code, is provided.

In step S2, a measurement is performed on the workpiece material to measure one or more relevant mechanical properties, e.g. Young's modulus or components of the stiffness tensor, and/or macroscopic mechanical response characteristics, e.g. stress-strain hysteresis, so that they can be compared with corresponding mechanical properties and/or macroscopic mechanical response characteristics obtained by simulating and analyzing as described below.

In step S3 the known material composition and the known microstructure data, i.e. the EBSD image of the selected workpiece material, is simulated based on selected simulation model parameters to obtain one or more mechanical response arrays of the material of the simulated workpiece. Initially, the simulation model parameters are provided by expert knowledge or as the result of previous calibration processes.

In step S4 the one or more mechanical response arrays obtained by the simulation of step S3 are analyzed to obtain the mechanical properties and/or macroscopic mechanical response characteristics. Analyzing allows to break down the micromechanical response arrays to macroscopic material properties.

Numerical optimization algorithms are usually based on many measurements of the optimization function. For cost-intensive measurements, the conventional optimization algorithms cannot be used. Instead, Bayesian optimization processes are used which comprise a modelling of a quality function which describe the behavior of the system and provide a quality measure based on the input parameters by which the system is operated. In the present matter, the quality function is defined as the accuracy of the simulation results based on the simulation model parameters. Therefore, the training of the quality function can be performed using training data which comprises a candidate of simulation model parameters and a resulting simulation accuracy. The resulting simulation accuracy defines the simulation quality by means of a function based on a difference between the simulation result and one or more mechanical properties and/or macroscopic mechanical response characteristics obtained by a measurement of the sample material.

The simulation model parameters are optimized in a Bayesian optimization process so that the simulation model adjusted by the optimized simulation model parameters applied on the EBSD image predict the micromechanical response arrays which result in the one or more mechanical properties and/or macroscopic mechanical response characteristics as measured.

The Bayesian optimization processes for the determining of optimal simulation model parameters applies candidate simulation model parameters iteratively to build up a quality function. The quality function is established by means of an underlying model, e.g. Gaussian process regression or a Bayesian Neural Network, to provide a function of the simulation accuracy (quality) as a function of the simulation model parameters. The quality function is trained based on the results of an experimentally measured one or more mechanical property and macroscopic mechanical response characteristics of the material of the selected workpiece.

With respect to the process flow of Figure 2, in step S5, the quality measure is determined based on a difference between the simulated one or more mechanical properties and/or macroscopic mechanical response characteristics and the measured one or more mechanical properties and/or macroscopic mechanical response characteristics.

For instance, the quality measure F can be obtained by experimental and simulated stress-strain hysteresis loops

$$F = \sqrt{\frac{1}{n}\sum_{j=1}^{n}(\sigma_{\exp} - \sigma_{\sim})^2}$$

where n represents the number of data points of each hysteresis, $\sigma_{\exp}$ and $\sigma_{\sim}$ the stresses measured in the experiments and calculated in the micromechanical simulation, respectively.

The macroscopic mechanical response characteristics may be given by hysteresis curves for the given material indicating the stress and strain of the material over cyclic loads. The difference between the experimental hysteresis curves and the simulated curves might be condensed into a quality measure which may indicate the quality of the results of the simulation process.

In step S6 the simulation model parameters used for the simulation of step S3 are associated to the quality measure obtained in step S5.

In step S7, a quality function is trained. The quality function may be modelled by means of a Gaussian process, Bayesian Neural Network or other trainable model, which can be trained based on the found simulation model parameters and the simulation accuracy.

Commonly, Bayesian optimization is applied if an unknown behavior *f* such as the behavior of the simulation model which may be regarded as a black box function shall be optimized. This unknown behavior *f* which corresponds to the real behavior of the simulation process can be determined for a value *x*. The observed value y of the unknown behavior *f* is provided as *y = f(x) + e*, wherein e corresponds to noise. In cases where the evaluation of the unknown behavior *f* is expensive, which means that it incurs costs by performing an evaluation for measuring, simulating or analyzing the unknown behavior in terms of time or material expenses. Therefore, it is a goal to perform the optimization with as few evaluations as possible.

The quality function indicating the characteristics of the quality of the simulation over the corresponding simulation model parameters, can be approximated by means of a Gaussian process regression, Bayesian Neural Network or other trainable model. The Bayesian Neural Network may alternatively be used to provide the same quality predictions including the uncertainty level required for the Bayesian Optimization process.

For further explanation the quality function is assumed to be a Gaussian process. A Gaussian process is a universal approximator which can be used as a surrogate function for the unknown quality function. In general, Gaussian processes are known as time, space or any other function, whose function values can be modelled only with probability as the given information is incomplete. By means of functions of the estimation variances and covariances, a Gaussian process describes its function values as a continuum of correlated random variables in the form of a high-dimensional normal distribution.

One property of the Gaussian process is that in the regions close or near to the simulation model parameter candidates, the prediction of the model is quite accurate and the quality function is well approximated, i.e. the estimation value has a low uncertainty. The farther the simulation model parameter candidate is distanced from the previously measured candidate vectors, the prediction of the Gaussian model has a high uncertainty.

Referring back to Figure 2, in step S8 an acquisition function is applied on the quality function to select a next simulation model parameter candidate which is selected for improving the quality function.

In step S9 it is checked whether the optimization process shall be terminated. The optimization process is terminated if a stop criteria is satisfied. The stop criteria may be defined as follows:

- a maximum account of iteration has been achieved,
- a convergence criterion is satisfied, or
- the overall uncertainty (variance) of the quality function is lower than a given tolerance threshold.

If it is found that the optimization process shall be terminated (alternative: Yes) the method is continued with step S3 with the newly obtained simulation model parameters. Otherwise (alternative: No) the process is continued with step S10.

The Gaussian process is trained by means of a number of simulation model parameter candidates which are determined using the Bayesian Optimization process. In any recursion (steps S3 to S9), a new simulation model parameter candidate is selected so that the Gaussian process model is improved and the uncertainty of the Gaussian process decrease. Therefore, the simulation model parameter candidates are chosen from a region (of the input data space) in which the quality function is promising (exploitation) or has not been (sufficiently) trained yet (exploration). Further, the new simulation model parameter candidates for fitting the quality function are chosen so that the quality function improves to reflect the behavior of the simulation model with respect to accuracy of the simulation results.

The quality function may be regarded as readily trained if the optimum of the quality function, i.e. the minimum or the maximum may reflect the adjusted simulation model parameters to be used as the calibration result. The training of the quality function further aims to be performed with a low number of simulations with the simulation model parameters candidates. Consequently, the simulation model parameters candidates are preferred which promise low (or high) function values based on the Gaussian process.

These contrary criteria of minimizing simulation runs and providing a good fit of the quality function are considered by means of the acquisition function which selects the simulation model parameters candidates so that the quality function may be continuously updated to be able to determine the optimum of the quality function, i.e. those simulation model parameters at which the best possible quality can be achieved.

The acquisition function uses parameters of the quality function which is described by means of a Gaussian process model, i.e. the Gaussian mean $\mu(x)$ and the Gaussian process standard deviation $\sigma(x)$. An example is the so-called lower confidence bound (LCB) or upper confidence bound (UCB) which are described as follows:

$$LCB(x) = \mu\ (x) - k\sigma\ (x) \text{ bzw. } UCB(x) = \mu\ (x) + k\sigma\ (x).$$

The factor k is usually set constant, e.g. k = 2. This new criterion can be minimized or maximized efficiently with standard gradient-based methods, respectively, and the minimum of LCB(X) or the maximum of UCB(X) indicates the new simulation model parameter candidate for the quality function. For the optimization of the acquisition function, it might be useful to predefine an optimization domain in which the next vector candidates are selected from. Other acquisition functions, such as expected improvement (EI), probability of improvement (PI) or entropy search methods are well known as well.

By the optimization of the acquisition function, the next simulation model parameter candidate is determined and the new evaluation using the simulation model parameter candidate is made.

In step S10, once it is determined that the recursive optimization process shall be finished, the quality function is optimized to obtain the simulation model parameters which are fit to the material of the workpiece. Optimizing the quality function is made by maximizing or minimizing the Gaussian mean of the quality function.

The simulation model parameters can include material parameters which may include a direct representation of material properties and/or a latent representation of the material or characteristics of the material using e.g. a latent variable. The latent variable can be a multidimensional vector which may define one of a number of materials in the latent space. So, a generative model may approximate the latent variable from the distribution and a decoder can reconstruct the mechanical response image from the material indicated by the latent variable.

By including the material parameters in the simulation model parameters, the quality function needs to be trained with workpieces of different materials, so that steps S1 and S2 are recursively repeated until the stop condition of step S9 has been satisfied. Including the material parameters in the simulation model parameters results in a joint-model which can be used to find the optimal parameters for a new material more quickly.

Specifically, for training the quality function, simulation model parameters including the material parameters are associated to a quality measure. For given material parameters, the optimal simulation model parameters are then rapidly found by optimizing the quality function. The joint-model learns the landscape of the quality function not only across different simulation model parameters but also across different materials, and is able to predict the quality of candidate simulation model parameters for yet unseen materials.

**Claims**

1. Computer-implemented method for calibrating a micromechanical simulation process used for simulating the micromechanical behavior of a material of a workpiece by determining simulation model parameters, comprising the steps of:

- Providing (S1) microstructure data of a given workpiece;
- Experimentally evaluating (S2) a mechanical behaviour of the given workpiece;
- Performing (S3-S9) a Bayesian optimization process on the basis of a trainable quality function to optimize the simulation model parameter for the given workpiece.

2. Method according to claim 1, wherein the quality function defines a quality measure depending on the simulation model parameters, wherein the quality measure is designed to evaluate a difference between the physically or experimentally evaluated mechanical behaviour and a modelled mechanical behaviour, wherein the modelled mechanical behaviour is obtained by means of the simulation with the corresponding simulation model parameters.

3. Method according to claim 2, wherein the mechanical behaviour includes one or more mechanical properties and/or macroscopic mechanical response characteristics, wherein the modelled mechanical behaviour is obtained by performing a micromechanical simulation on the microstructure data to obtain one or more mechanical response arrays and by analysing the one or more mechanical response arrays to obtain the one or more mechanical properties and/or macroscopic mechanical response characteristics.

4. Method according to claim 3, wherein the one or more micromechanical response arrays include an array of stress values, strain values and/or energy levels.

5. Method according to any of the claims 1 to 4, wherein the simulation model parameters further include material parameters indicating material characteristics and/or a material composition.

6. Method according to claim 5, wherein the Bayesian optimization process is performed on workpieces with different materials.

7. Method according to any of the claims 1 to 6, wherein simulation model parameters include critical resolved shear stress, hardening parameters and size parameters.

8. Method according to any of the claims 1 to 7, wherein the mechanical behaviour includes determining mechanical properties, particularly including Young's modulus or components of the stiffness tensor, and/or macroscopic mechanical response characteristics, e.g. stress-strain hysteresis.

9. System for calibrating a micromechanical simulation process used for simulating the micromechanical behavior of a material of a workpiece by determining simulation model parameters, wherein the system is configured to perform the steps of:

- Providing microstructure data of a given workpiece;
- Experimentally evaluating a mechanical behaviour of the given workpiece;
- Performing a Bayesian optimization process on the basis of a trainable quality function to optimize the simulation model parameter for the given workpiece.

10. A computer program comprising instructions which, when the program is executed by a computer, cause the computer to carry out the steps of the method of any of the claims 1 to 8.

11. A machine-readable storage medium comprising instructions which, when executed by a data processing unit, cause the data processing unit to carry out the steps of the method of any of the claims 1 to 8.

**Fig. 1**

**Fig. 2**

Europäisches
Patentamt

European
Patent Office

Office européen
des brevets

# EUROPEAN SEARCH REPORT

Application Number

EP 19 19 6083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BANDYOPADHYAY RITWIK ET AL: "Uncertainty Quantification in the Mechanical Response of Crystal Plasticity Simulations", JOM: JOURNAL OF METALS, SPRINGER NEW YORK LLC, UNITED STATES, vol. 71, no. 8, 13 June 2019 (2019-06-13), pages 2612-2624, XP036845230, ISSN: 1047-4838, DOI: 10.1007/S11837-019-03551-3 [retrieved on 2019-06-13] * the whole document * * figure 1 * * page 2613, column 2, paragraph 3 - page 2614, column 1, paragraph 1 * * page 2615, column 2, paragraph 1 * * figure 2 * * page 2617, column 1, paragraph 1 * ----- | 1-11 | INV. G06F30/23 G06F30/27 ADD. G06F111/10 G06F111/08 |
| X | OZTURK DENIZ ET AL: "Parametrically Homogenized Constitutive Models (PHCMs) for Multi-scale Predictions of Fatigue Crack Nucleation in Titanium Alloys", JOM: JOURNAL OF METALS, SPRINGER NEW YORK LLC, UNITED STATES, vol. 71, no. 8, 11 June 2019 (2019-06-11), pages 2657-2670, XP036845239, ISSN: 1047-4838, DOI: 10.1007/S11837-019-03554-0 [retrieved on 2019-06-11] * the whole document * * page 2658, column 2, paragraph 21 * * page 2661, column 2, paragraph 3 - page 2662, column 1, paragraph 1 * * page 2664, column 1, paragraph 3 - page 2664, column 2, paragraph 1 * ----- -/-- | 1-11 | TECHNICAL FIELDS SEARCHED (IPC) G06F |

The present search report has been drawn up for all claims

| Place of search | Date of completion of the search | Examiner |
|---|---|---|
| Munich | 2 March 2020 | Wellisch, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 19 19 6083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOTHA SHRAVAN ET AL: "Parametrically homogenized constitutive models (PHCMs) from micromechanical crystal plasticity FE simulations, part I: Sensitivity analysis and parameter identification for Titanium alloys", INTERNATIONAL JOURNAL OF PLASTICITY, vol. 120, 31 May 2019 (2019-05-31), pages 296-319, XP085725359, ISSN: 0749-6419, DOI: 10.1016/J.IJPLAS.2019.05.008 * the whole document * * page 298, paragraph 2 * * page 299, paragraph 1 * * page 302, paragraph 3 - page 303, paragraph 1 * * figure 1 * ----- | 1-11 | |
| | | | TECHNICAL FIELDS SEARCHED (IPC) |

The present search report has been drawn up for all claims

| Place of search | Date of completion of the search | Examiner |
|---|---|---|
| Munich | 2 March 2020 | Wellisch, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)